(19) Europäisches Patentamt
European Patent Office
Office européen des brevets

(11) Veröffentlichungsnummer : **0 277 219 B1**

# (12) EUROPÄISCHE PATENTSCHRIFT

(45) Veröffentlichungstag der Patentschrift : **27.02.91 Patentblatt 91/09**

(51) Int. Cl.$^5$ : **G11B 27/17**

(21) Anmeldenummer : **87905729.7**

(22) Anmeldetag : **03.07.87**

(86) Internationale Anmeldenummer : **PCT/EP87/00364**

(87) Internationale Veröffentlichungsnummer : **WO 88/00386 14.01.88 Gazette 88/02**

## (54) VERFAHREN ZUR ERMITTLUNG DER BANDLÄNGE VON BÄNDERN, INSBESONDERE MAGNETBÄNDERN.

(30) Priorität : **08.07.86 DE 3622895**

(43) Veröffentlichungstag der Anmeldung : **10.08.88 Patentblatt 88/32**

(45) Bekanntmachung des Hinweises auf die Patenterteilung : **27.02.91 Patentblatt 91/09**

(84) Benannte Vertragsstaaten : **AT BE CH DE FR GB IT LI LU NL SE**

(56) Entgegenhaltungen :
**EP-A- 0 216 260**
**BE-A- 886 249**

(56) Entgegenhaltungen :
**DE-A- 3 318 324**
**FR-A- 2 425 699**
**FR-A- 2 472 813**
**US-A- 4 217 615**
**Patent Abstracts of Japan, Vol. 7, No. 87, (P-190) (1232), 12 April 1983 & JP, A, 5814389**
**Patent Abstracts of Japan, Vol. 5, No. 161, (P-84) (833), 16 October 1981 & JP, A, 5690479**

(73) Patentinhaber : **Deutsche Thomson-Brandt GmbH**
**Hermann-Schwer-Strasse 3 Postfach 1307**
**D-7730 Villingen-Schwenningen (DE)**

(72) Erfinder : **KAADEN, Jürgen**
**Im Tannhörnle 10**
**D-7730 Villingen-Schwenningen (DE)**

**EP 0 277 219 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft ein Verfahren zur Ermittlung der abgelaufenen und/oder noch zur Verfügung stehenden Spielzeit eines Magnetbandes, welches von einer Abwickelspule auf eine Aufwickelspule gewickelt wird. So ist aus der FR-A-2 472 813 ein solches Verfahren gemäß dem Oberbegriff von Anspruch 1 bekannt. Auch aus der US-PS 4 280 159 ist es bekannt, die Restbandmenge eines auf einer Abwickelspule eines Magnetbandgerätes noch zur Verfügung stehenden Magnetbandes zu ermitteln. Dies geschieht während des Vorschubs des Bandes. Bei dieser Ermittlung ergeben sich jedoch zuweilen Fehler in der Anzeige, die das Verfahren unbefriedigend machen.

Der Erfindung liegt die Erkenntnis zugrunde, daß die Anzeigefehler auf Toleranzen der Banddicke beruhen. Magnetbänder können nämlich von Charge zu Charge oder Kassette zu Kassette verschiedene Dicke d besitzen, ohne daß dies dem Benutzer erkennbar wäre.

Die für Videokassetten verwendeten Bänder haben Banddicken, die zugelassene Toleranzen beinhalten. Ein Band mit der Normdicke D = 19 um darf z.B. Werte zwischen d = 17 und 20 um haben. Auch kann die in der Kassette aufgespulte Gesamtlänge des Magnetbandes zu höhern Werten um einige Minuten abweichen, um dem Benutzer der Kassette eine Mindestspielzeit zu garantieren. Bei Berechnung der Restbandlänge bzw. der Restspielzeit oder der Gesamtspielzeit aufgrund von Formeln, bei denen für die Dicke d und den Dorndurchmesser $D_o$ Konstante mit den Normwerten werden. Die Berechnung ergibt ein falsches Resultat, wenn diese Daten innerhalb der zugelassenen Toleranzen von den Normwerten abweichen.

Der Erfindung liegt die Aufgabe zugrunde, Fehler bei der Messung und Anzeige der Restbandlänge bzw. der Spielzeit aufgrund von Toleranzen der Dicke des Magnetbandes zu vermeiden.

Diese Aufgabe wird durch die im Patentanspruch aufgeführten Merkmale gelöst.

Nachstehend wird das Wesentliche der Erfindung mit Hilfe der Zeichnung beschrieben.

Figur 1 zeigt ein Ablaufdiagramm zur Berechnung der realen Spieldauer unter Berücksichtigung unterschiedlicher Banddicken ;

Figur 2 zeigt eine graphische Darstellung zur Erläuterung der Unterschiede und Klassifizierung der unterschiedlichen Kassettentypen.

Figur 3 zeigt ein Blockschaltbild zur Durchführung des Verfahrens.

Zunächst werden mittels einer Zeitmeßeinrichtung die Umdrehungszeiten $t_L$, $t_R$ einer Vollumdrehung der beiden Bandwickel ermittelt. Diese Zeitmessung kann dadurch erfolgen, daß entweder die Zeit mehrerer Umdrehungen gemessen und daraus der Mittelwert gebildet wird oder daß die Zeit nur eines Teils einer Vollumdrehung gemessen und dann durch Multiplikation auf eine Vollumdrehung umgerechnet wird. Im ersten Fall geht jedoch unnötig Zeit verloren, zum Ergebnis zu gelangen, im zweiten Fall leidet die Genauigkeit der Messung. Es ist deshalb ratsam den Zeitwert während genau einer Vollumdrehung zu bestimmen, was sowohl in Bezug auf Geschwindigkeit als auch Genauigkeit einen guten Kompromiss darstellt.

Nach Ermittlung der beiden Zeiten $t_L$ und $t_R$ wird daraus die Summt $t = t_L+t_R$ gebildet. Aus diesem Ergebnis kann auf den Durchmesser des Wickeldorns geschlossen werden, indem das Ergebnis mit einem Grenzwert $t_g$ verglichen wird. Zur Erläuterung zwecks Bestimmung des Wickeldorndurchmessers Do dient die Figur 2. Bei den genormten VHS-Kassetten gibt es solche mit 30, 60, 90, 120, 180 und 240 Min. Spielzeit. Die Kassetten werden mit E30 bis E240 bezeichnet. Die Kassetten E30, E60 und E90 besitzen einen Dorndurchmesser Do von 62 mm, während die Kassetten von E120, E180, E240 einen Dorndurchmesser Do von 23 mm besitzen. In Figur 2 sind die Umdrehungszeiten $t_L+t_R$ als Summe t aufgetragen, die sich in Abhängigkeit von der ab- bzw. aufgewickelten Windungszahl $n_L$ bzw. $n_R$ ergeben. Hieraus ist zu erkennen, daß es einen Grenzwert tg gibt, der durch Vergleich mit der Summe t auf den Dorndurchmesser Do schliessen läßt. Sämtliche unter diesem Grenzwert tg liegenden Meßwerte bedeuten, daß es sich um Kassetten mit einem Dorndurchmesser Do von 26 mm handelt, liegt der Meßwert oberhalb dieses Grenzwertes tg ist eine Kassette mit großem Dorndurchmesser Do = 62 mm in Betrieb.

Man erkennt aus der graphischen Darstellung nach Figur 2 auch, daß die Unterscheidung zwischen einer E240 – Kassette und einer E30 – Kassette am kritischsten ist. Die Kurven 1 beziehen sich auf die Kassette E180 und die Kurven 2 auf die Kassette E240 die Kurven 3 auf die Kassette E30. Es sind pro Kassette jeweils zwei Kurven aufgetragen, wobei die jeweils unter für Kassetten mit an den unteren Toleranzgrenzen liegenden Werten für die Banddicke d und den Dorndurchmesser Do und die jeweils oberen für Kassetten mit an den oberen Toleranzgrenzen liegenden Werten gelten.

Die Kassettendaten liegen zwischen den Werten gemäß folgender Tabelle

| | T Min | d µm | $D_o$ mm |
|---|---|---|---|
| E180 min | 180 | 17 | 25,85 |
| E180 max | 186 | 20 | 26,15 |
| E240 min | 240 | 15,1 | 25,85 |
| E240 max | 246 | 16,1 | 26,15 |
| E30 min | 30 | 17 | 61,8 |
| E30 max | 34 | 20 | 62,2 |

Eine vollkommen aufgewickelte E30 – Kassette unterscheidet sich im Wickeldurchmesser sehr gering von einer halb abgewickelten E240 – Kassette, wenn diese mit ihren Werten für $D_o$ und d sowie der Spielzeit, nach oben um 6 min. abweichen darf, an ihrer oberen Toleranzgrenze liegt. Dies stellt den ungünstigsten Fall für eine Unterscheidung dar. Der Grenzwert für tg wird deshalb auf den halben zeitlichen Abstand einer Vollumdrehung der Werte für t einer voll aufgewickelten E30 – Kassette und einer halb abgewickelten E240 – Kassette gelegt. Rechnerisch ergibt sich dabei ein Wert für tg von 17,5 sec. Von diesem Wert unterscheiden sich die Zeiten t für beide Kassetten um 40 msec., was ausreichend für eine Unterscheidung ist. Hierbei muß angemerkt werden, daß die Unterscheidung in der Praxis dadurch günstiger wird, weil der angenommene Worst-case-Fall kaum auftritt, da bei Erreichen der oberen Toleranzgrenze für die Banddicke bei der E240 – Kassette aus geometrischen Gründen nicht die volle zulässige Abweichung der Spielzeit nach oben, d.h. die zulässige Bandlänge in die Kassette paßt.

Nach dem Grenzwertvergleich und damit der Bestimmung des vorliegenden Wickeldorndurchmessers Do wird dessen Maß abgespeichert, welches zur Berechnung der auf den beiden Wickeln befindlichen Windungszahlen $n_L$ und $n_R$ benötigt wird. Die Formel für n lautet,

$$n_L = \frac{(t_L \cdot v)/\pi - Do}{2d}, \qquad n_R = \frac{(t_R \cdot v)/\pi - Do}{2d}$$

wobei für $t_L$ bzw. $t_R$ in die ermittelten Zeiten einer Vollumdrehung der Wickel, für v. die genormte Bandgeschwindigkeit (bei VHS v = 23,39 mm/sec.), für Do der Wickeldorndurchmesser in mm und für d die Standarddicke 0,019 mm eingesetzt wird.

Sind die Windungszahlen $n_L$ und $n_R$ ermittelt, wird nach der Beziehung

$$T_L = \frac{n_L Do + n_L (n_L + 1)}{v \cdot 60} ; \qquad T_R = \frac{n_R \cdot Do + n_R 6 n_R + 1)}{v \cdot 60}$$

$$T = T_L + T_R$$

die abgelaufene, Rest- oder Summenzeit errechnet. Aus der Summenzeit wird klassifiziert, um welche Sollzeit es sich handelt gemäß folgender Tabelle :

| T Min | $T_N$ Min |
|---|---|
| 161-189 | 180 |
| 107-126 | 120 |
| 80-95 | 90 |
| 54-63 | 60 |
| 27-32 | 30 |

indem durch Vergleich der ermittelten Zeit T mit den möglichen Sollzeiten die aktuelle Sollzeit festgestellt wird. Diese wird in einem nachfolgenden Schritt benötigt, um mit der Beziehung

$$d' = \frac{T}{T_N} \cdot d$$

die Ist-Dicke des Bandes zu berechnen, wobei T die berechnete Zeit, $T_N$ die Sollzeit und d die Nombanddicke darstellt.

Daraufhin wird mit der realen Dicke d' erneut die Windungszahl nach der Beziehung

$$n'_L = \frac{(t_L \cdot v)/\pi - Do}{2d'} \qquad n'_R = \frac{t_R \cdot v)/\pi - Do}{2d'}$$

berechnet, aus welcher die Zeiten $T'_R$ und $T'_L$ abgeleitet werden. Die neue Summe $T = T'_R + T'_L$ ist die genaue Zeit, die entweder als Summenzeit T oder deren Summanden $T'_L$ oder $T'_R$ als Restzeit oder abgelaufene Zeit zur Anzeige gebracht wird.

In Figur 3 wird das angeme – dete Verfahren anhand eines Blockschaltbildes verdeutlicht.

Das Magnetband 1 wird von einen auf einem Abwickeldern 2 mit dem Durchmesser D0 aufgewickelten Spule 3 mit einem momentanen Wickeldurchmesser D1 abgewickelt und auf den Aufwickeldorn 2′ mit dem Durchmesser D0 auf eine Spule 3′ mit einem momentanen Wickeldurchmesser D1′ aufgewickelt. Die Wickeldorne 2 und 2′ werden über Achsen 4 und 4′ von nicht näher gezeigte- Motoren angetrieben. Das Magnetband 1 wird in üblicher Weise von einer Welle in Zusammenwirken mit einer Andruckrolle mit einer genormten Vorschubgeschwindigkeit v angetrieben. Auf den Achsen 4 und 4′ sind Scheiber 5 und 5′ angebracht, an denen Marken zum Zählen von Umdrehumgen der Wickeldorne 2 und 2′ angeordnet sind, die von Fühlelementen 6 und 6′ detektiert werden. Nach Verstärkun g über Verstärker 7 und 7′ gelangen die Impulse T und T′ an Zähler 8 und 8′. Die Dauer einer Umdrehung der Wickeldorne 2 und 2′ wird in den Zählern 8 und 8′ gemessen, indem von einem Geherator 9 über einen Teiler 10 einlaufende Taktimpulse C über die Leitung c gezählt werden. Der Zählwert einer Umdrehung gehangt über die Datenleitungen Z und Z′ in das Rechenwerk 11, welches den Zähler 8 bzw. 8′ vor der Messung über die Leitunger und Ø und Ø zurückgesetzt hat. Der Beginn der Zählung und der Zeitpunkt der Datenübernarme wird bestimmt durch den zu Beginn der Messung von der Markierung auf der Scheibe 5 bzw. 5′ abgegebenen Impuls über die leitung a bzw. a′ sowie über den nach einer vollen Umdrehung übertragenen Impuls. Das Rechenwerk 11 wurde vor Beginn der Messung durch den Benutzer über den Schalter 12 initialisiert. Die Bandvorschubsteuerschaltung 13 gibt dem Rechenwerk über die Leitung v/r eine Information über die Laufrichtung des Magnetbandes 1 sowie über die Datenleitung v-data über dessen Vorschubgeschwindigkeit. Die Summenbildung der beiden über die Datenleitungen Z und Z′ eingegebenen Werte für die Zeiten $t_L$ und $t_R$ je einer Umdrehung der beiden Dorne 2 und 2′ geschieht in dem Rechenwerk 11. In einem Speicher 14 für Grenzwerte und Konstanten ist der Grenzwert tg abgespeichert, mit dem die ermittelte Summe aus $t_L$ und $t_R$ verglichen wird. Daraus ergibt sich der Dorndurchmesser Do der ebenfalls in einer Adresse des Speichers 14 abgelegt wird. Im Rechenwerk 11 erfolgt sodann die Berechnung der momentanen auf den Dornen befindlichen Windungen $n_L$ und $n_R$. Diese werden benötigt, um entweder die Restspielzeit $T_L$ oder die abgespielte Zeit $T_R$ bzw. die Gesamtspieldauer T des Magnetbandes zu berechnen. Die Daten für die konstanten und errechneten abgespeicherten Werte werden über die Adressenleitung A angesprochen. Der Datenaustausch zwischen Rechenwerk 11 und Speicher 14 geschieht über die Datenleitung D. über die Leitung M

erfolgt die Ansteuerung einer Anzeige 15. Die reale Dicke des Magnetbandes 1 erhält man durch Vergleich der ermittelten Spielzeit T zur Soll-Spielzeit $T_N$ die beide im Speicher 14 abgelegt sind. über die abgespeicherte korrigierte Banddicke d' gelangt man zur wahren Spielzeit $T'_L$, $T'_R$ bzw. T'.

## Ansprüche

1. Verfahren zur Ermittlung der Restbandlänge eines auf einem Wilckeldorn aufgewickelten Magnetbandes mit folgenden Schritten :

a) Ermittlung der Zeiten $t_L$ und $t_R$ einer Umdrehung der beiden Wickeldorne,

b) Zuführung der beiden. Zeiten zu einem Rechenwerk zwecks Addition zu einer Zeitsumme $t = t_L + t_R$,

c) Vergleich der Zeitsumme t mit einem vorgegebenen Grenzwert $t_g$, der charakteristisch für die Bestimmung des Wickeldorndurchmessers $D_0$ ist, gekennzeichnet durch,

d) Errechnen der Windungszahlen $n_L$ und $n_R$ nach der Beziehung :

$$n_L = \frac{(t_L \cdot v)/\pi - D_0}{2 \cdot d} \quad \text{und}$$

$$n_R = \frac{(t_R \cdot v)/\pi - D_0}{2 \cdot d}$$

mit v gleich der Normgeschwindigkeit des Magnetbandes und d (der Normbanddicke gleich 19 µm),

e) Errechnen der Wickelzeiten $T_L$ und $T_R$ aus den Windungszahlen $n_L$ und $n_R$ nach der Beziehung :

$$T_L = \frac{(n_L \cdot D_0) + n_L (n_L + 1)}{v \cdot 60} \pi \quad \text{und}$$

$$T_R = \frac{(n_R \cdot D_0) + n_R (n_R + 1)}{v \cdot 60} \pi ,$$

f) Summenbildung der beiden Zeiten$T_L$ und $T_R$ zu einer Zeitsumme $T_{ist}$,

g) Vergleich der Zeitsumme $T_{ist}$ mit mehreren um die Normzeiten der Kassette liegenden Zeitfenstern zur Klassifizierung der Normzeit $T_{soll}$ der in Betrieb befindlichen Kassette,

h) Ermittlung der realen Banddicke d' nach der Beziehung :

$$d' = \frac{T_{ist}}{T_{soll}} \cdot d ,$$

j) Errechnung der realen Windungszahlen $n'_L$ und $n'_R$ nach der Beziehung gemäß d) mit d=d' und,

k) Errechnung der realen Wickelzeiten $T'_L$ und $T'_R$ aus den Windungszahlen $n'_L$ und $n'_R$ nach der Beziehung gemäß e).

## Claims

1. A method of ascertaining the remaining tape length of a magnetic tape wound on a coil mandrel having the following steps :

a) determining the times $t_L$ and $t_R$ of a rotation of the two coil mandrels,

b) supplying the two times to an arithmetic unit for the purpose of addition into a time sum $t = t_L + t_R$,

c) comparing the time sum t with a predetermined limit value $t_g$, which is characteristic for the determination of the coil mandrel diameter $D_0$, characterised by,

d) calculating the turn numbers $n_L$ and $n_R$ according to the relationship :

$$n_L = \frac{(t_L \cdot v)/\pi - D_o}{2 \cdot d} \quad \text{and}$$

$$n_R = \frac{(t_R \cdot v)/\pi - D_o}{2 \cdot d}$$

with v equal to the standard speed of the magnetic tape and d (to the standard tape thickness which equals 19 µm),

e) calculating the coil times $T_L$ and $T_R$ from the turn numbers $n_L$ and $n_R$ according to the relationship :

$$T_L = \frac{(n_L \cdot D_o) + n_L (n_L + 1)}{v \cdot 60} \pi \quad \text{and}$$

$$T_R = \frac{(n_R \cdot D_o) + n_R (n_R + 1)}{v \cdot 60} \pi$$

f) forming sums of the two times $T_L$ and $T_R$ into a time sum $T_{ist}$,

g) comparison of the time sum $T_{ist}$ with a plurality of time, windows which are near the standard times, of the cassette in order to classify the standard time $T_{soll}$ of the cassette in operation,

h) determining the real tape thickness d' according to the relationship :

$$d' = \frac{T_{ist}}{T_{soll}} \cdot d$$

j) calculating the real turn numbers $n'_L$ and $n'_R$ according to the relationship according to d) with d=d' and

k) calculating the real coil times $T'_L$ and $T'_R$ from the turn numbers $n'_L$ and $n'_R$ according to the relationship according to e).

## Revendications

1. Procédé pour la détermination de la longueur de bande restante d'une bande magnétique enroulée sur un mandrin de bobinage, comprenant les pas suivants :

a) déterminatin des temps $t_L$ et $t_R$ d'un tour des deux mandrins de bobinage,

b) introductin des deux temps dans un organe de calcul pour obtenir par addition une somme $t = t_L + t_R$,

c) comparaison de la somme t avec une valeur limite tg prédéfinie caractéristique pour la détermination du diamètre du mandrin de bobinage $D_o$, caractérisé par :

d) le calcul des nombres de spires $n_L$ et $n_R$ d'après la relation :

$$n_L = \frac{(t_L \cdot v)/\pi - D_o}{2 \cdot d} \pi \quad \text{et}$$

$$n_L = \frac{(t_R \cdot v)/\pi - D_o}{2 \cdot d} \pi,$$

avec v égale à la vitesse normalisée de la bande magnétique et d (l'épaisseur normalisée de la bande égale à 19 µm),

e) le calcul, au moyen des nombres de spires $n_L$ et $n_R$, des temps de bobinage $T_L$ et $T_R$ d'après la relation :

$$T_L = \frac{(n_L . D_o)+n_L \ (n_L+1)}{v.60} \, \boldsymbol{\tau} \quad \text{et}$$

$$T_L = \frac{(n_R . D_o)+n_R \ (n_R+1)}{v.60} \, \boldsymbol{\tau},$$

f) la totalisation des deux temps $T_L$ et $T_R$ pour obtenir une somme $T_{réel}$,

g) la comparaison de la somme $T_{réel}$ avec plusieurs fenêtres temporelles situées autour des temps normalisés de la cassette pour la classification du temps normalise $T_{cons}$ de la cassette en service,

h) la détermination de l'épaisseur de bande réelle d'après la relation :

$$d' = \frac{T_{réel}}{T_{cons}} . d,$$

j) le calcul des nombres de spires réels $n'_L$ et $n'_R$ d'après la relation selon d) avec d = d' et

k) le calcul des temps de bobinage réels $T'_L$ et $T'_R$ au moyen des nombres de spires $n'_L$ et $n'_R$ d'après la relation selon e).

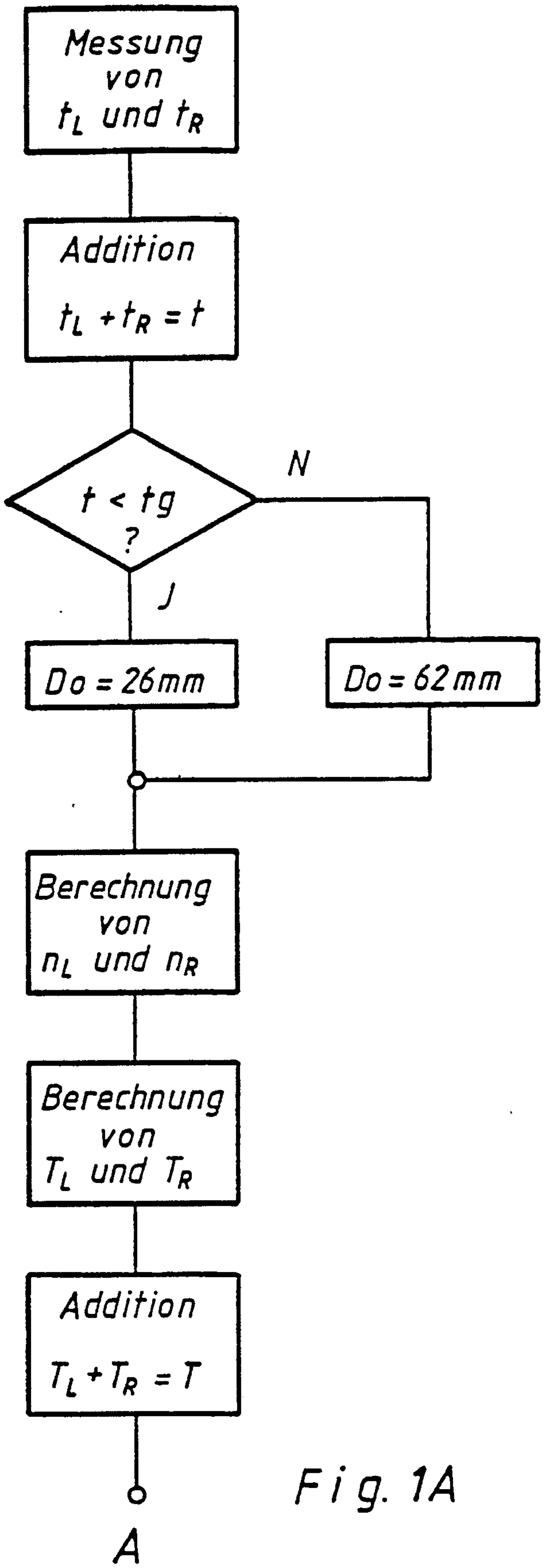
Messung von $t_L$ und $t_R$
Addition
$t_L + t_R = t$
$t < tg$ ?
N
J
Do = 26mm
Do = 62mm
Berechnung von $n_L$ und $n_R$
Berechnung von $T_L$ und $T_R$
Addition
$T_L + T_R = T$
A

Fig. 1A

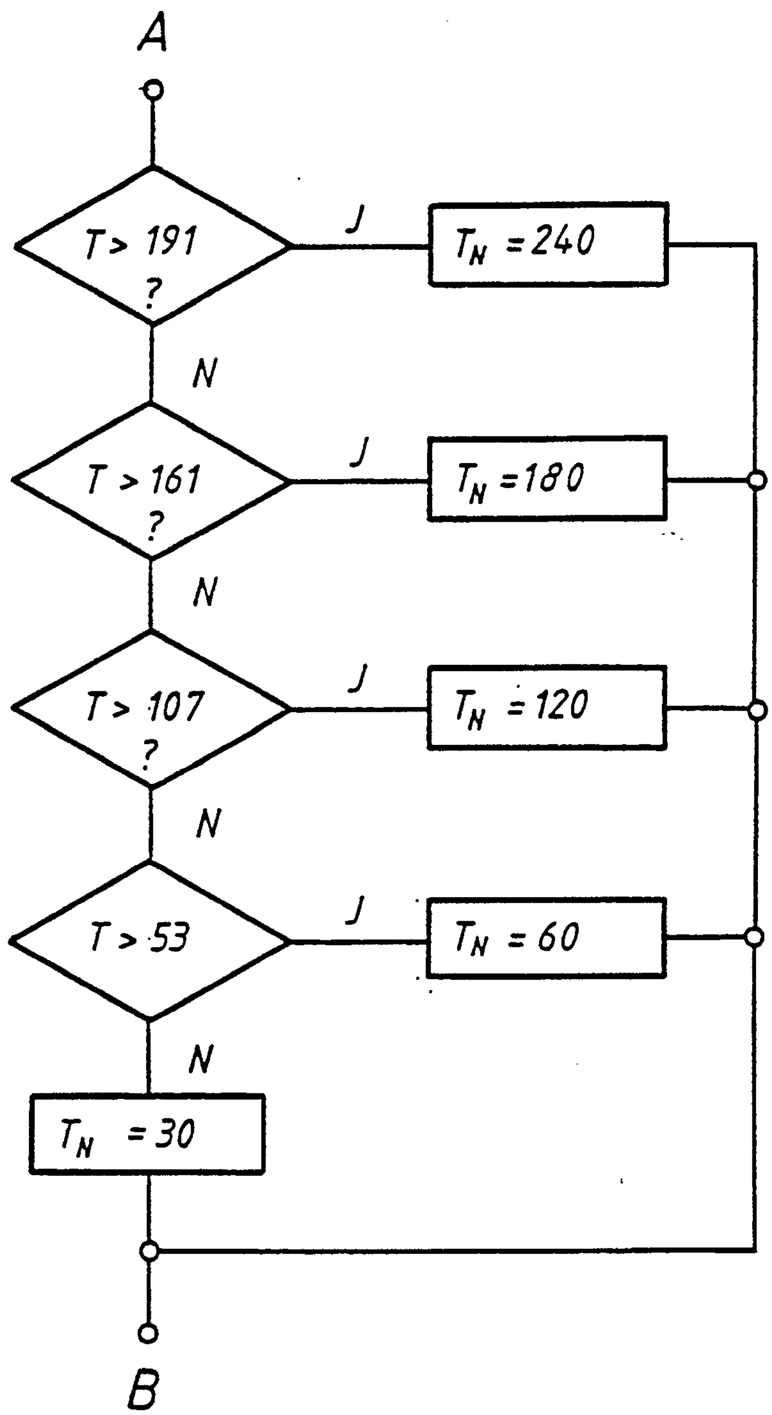


Fig. 1 B

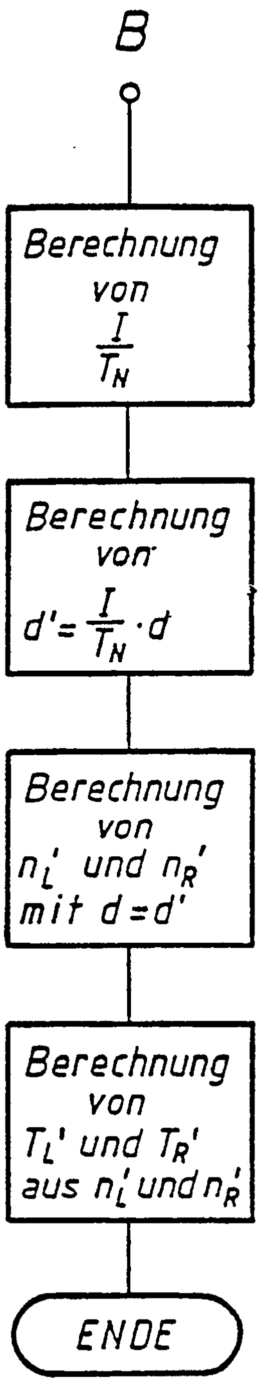
B
Berechnung von $\frac{I}{T_N}$
Berechnung von $d' = \frac{I}{T_N} \cdot d$
Berechnung von $n_L'$ und $n_R'$ mit $d = d'$
Berechnung von $T_L'$ und $T_R'$ aus $n_L'$ und $n_R'$
ENDE

Fig. 1C

Fig. 2

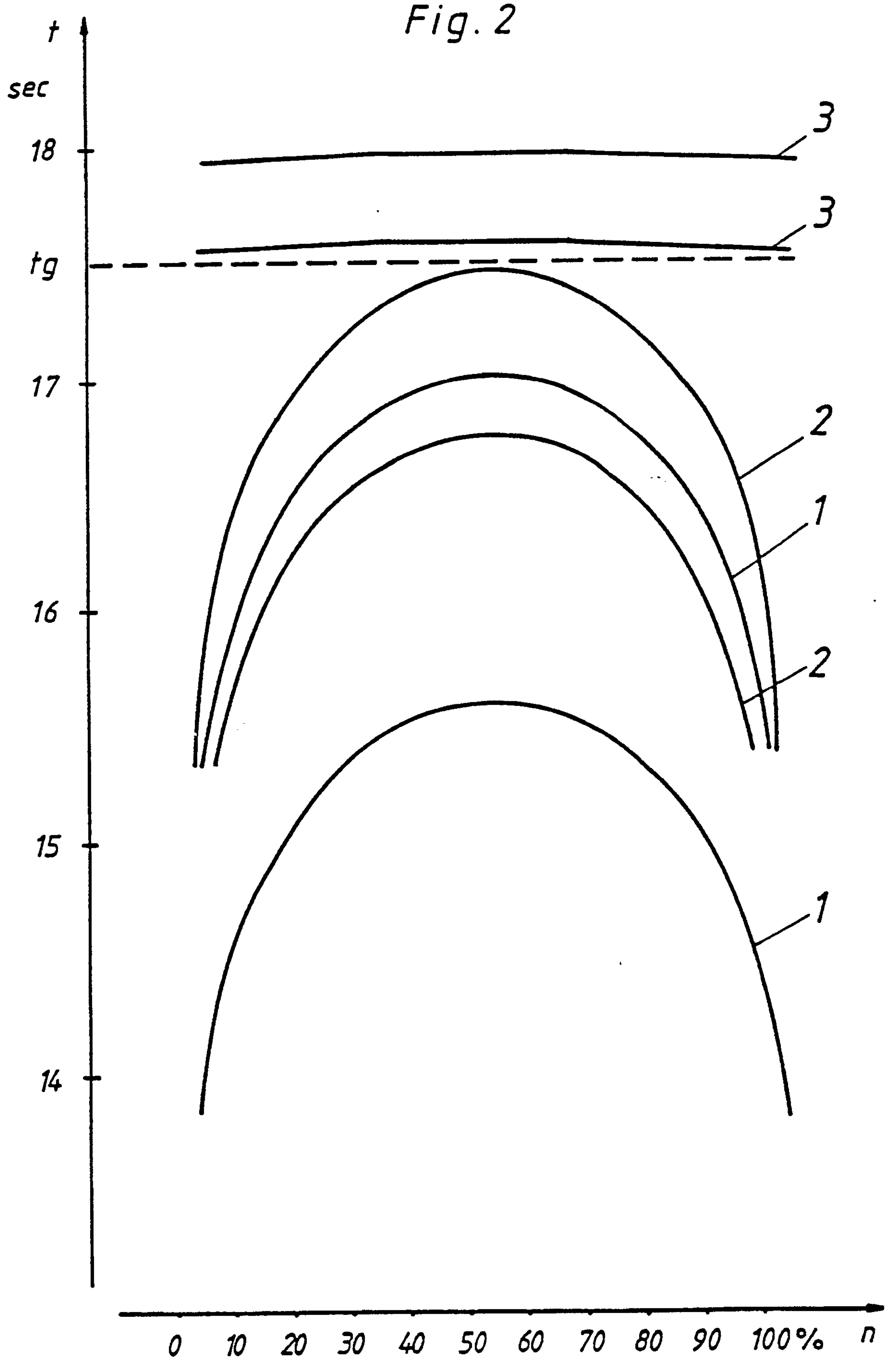

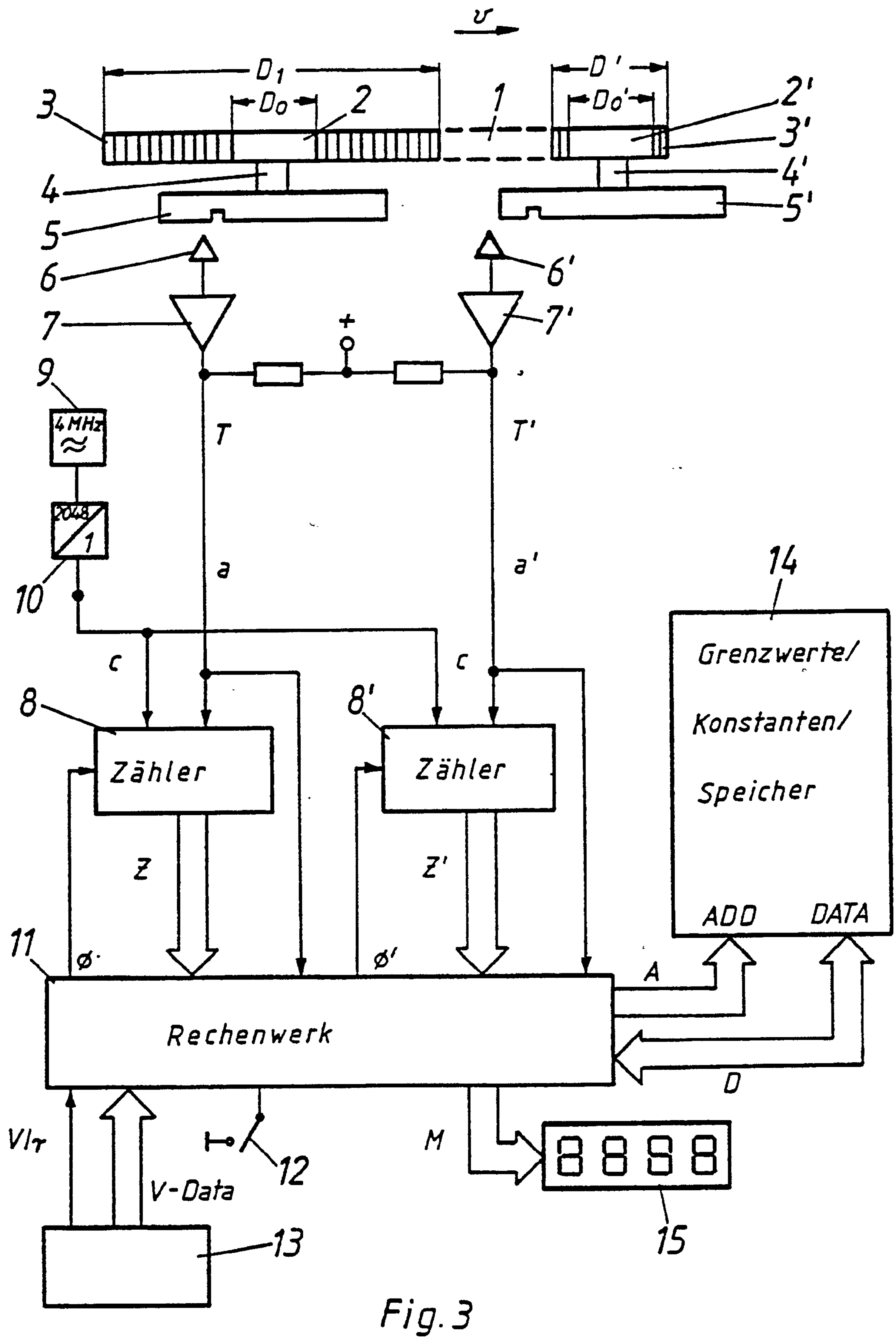

v
D1
D'
Do
Do'
1
2
2'
3
3'
4
4'
5
5'
6
6'
7
7'
+
9
4MHz
10
2048
1
T
T'
a
a'
c
c
8
8'
Zähler
Zähler
Z
Z'
11
Ø
Ø'
Rechenwerk
A
D
14
Grenzwerte/
Konstanten/
Speicher
ADD
DATA
VIr
V-Data
12
M
15
13


Fig. 3